Europäisches Patentamt

European Patent Office

Office européen des brevets

(19)

(11) **EP 0 862 123 A2**

(12) **EUROPÄISCHE PATENTANMELDUNG**

(43) Veröffentlichungstag:
02.09.1998 Patentblatt 1998/36

(51) Int. Cl.⁶: $G06F\ 17/30$

(21) Anmeldenummer: 98102287.4

(22) Anmeldetag: 10.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 27.02.1997 DE 19708021

(71) Anmelder:
SIEMENS AKTIENGESELLSCHAFT
80333 München (DE)

(72) Erfinder: Alonso, Luis
81539 München (DE)

(54) **Verfahren zur Regelung eines Zugriffs von Rechnern auf Daten eines zentralen Rechners**

(57) Das Verfahren regelt den Zugriff mehrerer Rechner auf Daten eines zentralen Rechners. Dabei sind in dem Verfahren generell Operationen auf lokalen Kopien einer echten Teilmenge durch Rechner möglich. Zur Synchronisation werden Protokolldateien, die die Operationen auf den replizierten Daten enthalten, zum zentralen Rechner geschickt. Wenn es bei der Synchronisation zu zahlreichen Konflikten durch den Zugriff mehrerer Rechner auf die gleichen Datensätze auf dem zentralen Rechners kommt, kann das Verfahren geregelten Zugriff auf die gemeinsamen Daten und damit die Lösung der Konflikte anbieten. Diese Veränderung der Betriebsweise zur Auflösung von Konflikten beim Zugriff auf gemeinsame Daten kann auch automatisch mittels vorgebbarer Schwellwerte für akzeptable und inakzeptable Kollisionszahlen erfolgen. Sollen Konflikte generell vermieden werden, wie z.B. bei Bankanwendungen, so stellt das Verfahren den Dienst von Transaktionen bereit, die entweder vollständig ausgeführt werden, oder vollständig rückgängig gemacht werden können. Mögliche Anwendungen sind u.a.: Kundenbetreuung eines Außendienstmitarbeiters, elektronische Überweisung, mobile Bestandsverwaltung, etc.

FIG 5

EP 0 862 123 A2

**Beschreibung**

Die Erfindung betrifft ein Verfahren zur Regelung eines Zugriffs von Rechnern auf Daten eines zentralen Rechners.

Ein herausragendes Anwendungsgebiet von Computersystemen ist das Speichern und Verwalten von Daten. Ein Teil dieser Daten ist ausschließlich von privater Natur und es besteht kein Interesse, diese Daten in dem Computersystem verteilt mehreren Anwendern anzubieten. Die weitaus größere Menge an Daten allerdings sollte gerade verteilt zugänglich sein: Zum Beispiel Daten eines Geschäftsbereichs, Projektdaten oder Daten einer Arbeitsgruppe.

Die Kernfragen bezüglich des Zugriffs auf verteilte Daten sind:

1. Wie wird sichergestellt, daß die Daten stets in einem validierten Zustand sind (Problem der doppelten Datenhaltung)?
2. Wie werden Konflikte bei konkurrierendem Zugriff auf denselben Datensatz aufgelöst?

Um also Konsistenz von Daten zu gewährleisten, gibt es je nach Anwendungsgebiet und Anforderung verschiedene Lösungsansätze.

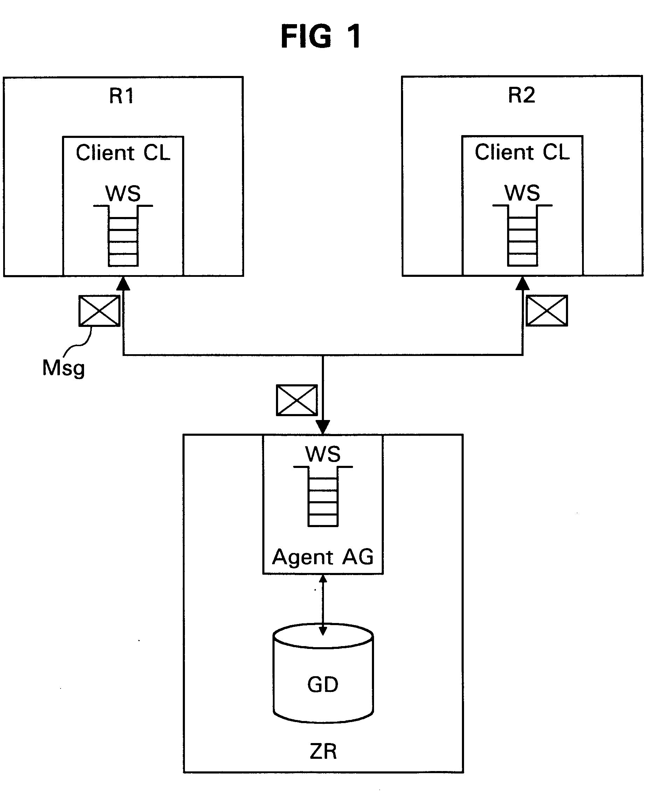

Aus [1] ist ein asynchrones Verfahren bekannt. Die beiden Rechner R1 und R2 verfügen über eine begrenzte Anzahl von Kommandos, die als Nachrichten Msg von einem Client CL auf den Rechnern R1 und R2 zu einem Agenten AG auf dem zentralen Rechner ZR geschickt werden (siehe Fig.1). Da meist nicht alle Nachrichten Msg sofort verarbeitet werden können, verfügen sowohl der Client CL als auch der Agent AG über Warteschlangen WS. Die in Form von Nachrichten Msg gesendeten Kommandos stoßen im Agenten AG vordefinierte Operationen an, die der Agent AG dann beispielsweise via SQL (="Structured Query Language") auf den gemeinsamen Daten GD ausführt. In diesem Ansatz sind Client CL und Datenserver (hier der zentrale Rechner ZR) mit den gemeinsamen Daten GD voneinander entkoppelt. Nachteilig an diesem asynchronen Verfahren sind die eingeschränkte Flexibilität, die durch fest vorgegebene Operationen auf dem Datenserver gegeben ist, die Nutzung des jeweiligen Rechners R1/R2 ausschließlich als Ein-/Ausgabeschnittstelle ohne Ausnutzung der Rechenleistung auf den Rechnern R1/R2 und die Verfügbarkeit des zentralen Rechners ZR bei Zugriff mehrerer Rechner R1/R2 auf die gemeinsamen Daten GD oder bei Zugriff über physikalisch schlechte bzw. fehlerhafte Kommunikationsleitungen. Dieses asynchrone Verfahren wird auch als "pessimistisches" Verfahren bezeichnet, da die Zugriffe mehrerer Rechner R1/R2 auf eine Menge gemeinsamer Daten GD ohne die asynchrone Bearbeitung zu Kollisionen führen würden.

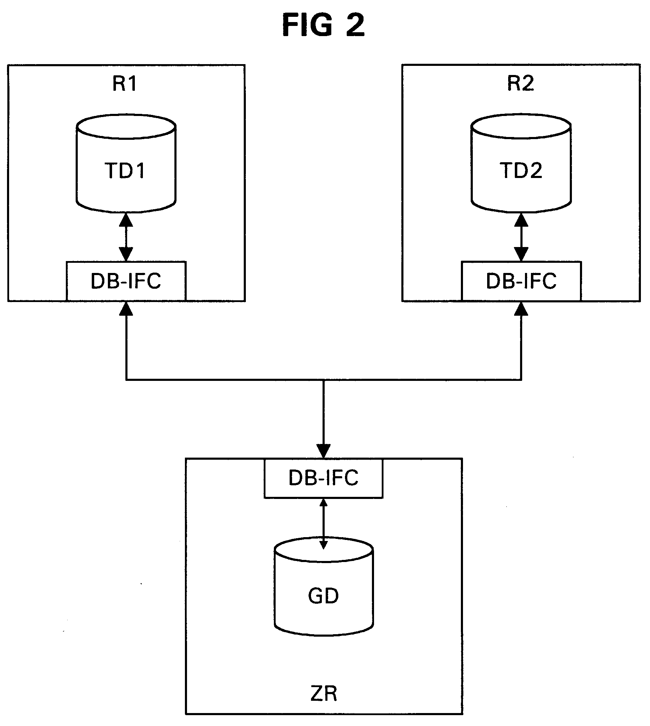

Weiterhin ist aus [2] bekannt, den Datenzugriff mehrerer Rechner R1/R2 auf gemeinsame Daten synchron in einem "optimistischen" Verfahren zu regeln (siehe Fig.2). Auf jedem Rechner R1 und/oder R2 sind Teildaten TD1/TD2 der gemeinsamen Daten GD repliziert vorhanden, hier im Beispiel auf dem Rechner R1 die Teildaten TD1 und auf dem Rechner R2 die Teildaten TD2. Dabei können sowohl auf dem Rechner R1 als auch auf dem Rechner R2 ganz oder teilweise die gleichen Datensätze bearbeitet werden. In dem in Fig.2 angegebenen Beispiel wird der Zugriff auf die einzelnen Datensätze über ein Datenbankinterface DB-IFC geregelt. Im Gegensatz zu dem in Fig.1 beschriebenen asynchronen Modell besteht hier die Möglichkeit, auf jeden Rechner R1/R2 ohne Verbindung zum zentralen Rechner ZR ("disconnected mode") zu arbeiten mit einem durch das Datenbankinterface DB-IFC vorgegebenen Satz an Kommandos. In diesem Ansatz ist die volle Flexibilität des Datenbankzugriffs gewährleistet, da die Datensätze lokal vorhanden sind und das Datenbankinterface (z.B. SQL-Interface) für vorgebbare Datenbankoperationen bereitsteht. Nachteilig zu dem in Fig.1 beschriebenen asynchronen Verfahren ist bei dem synchronen Verfahren aus Fig.2 die mangelnde Gewährleistung konsistenter Datensätze. Dafür ist aber die Verfügbarkeit der Daten entsprechend hoch, da Teildaten auf jedem Rechner R1/R2 repliziert gehalten werden können und somit auch jeder Rechner R1/R2 alle durch das Datenbankinterface DB-IFC vorgebbaren Möglichkeiten hat, Operationen auf den lokal vorhandenen Daten auszuführen.

Die dem erfindungsgemäßen Verfahren zugrundeliegende **Aufgabe** besteht darin, mehreren Rechnern den Zugriff auf Daten eines zentralen Rechners mit hoher Verfügbarkeit und Gewährleistung hoher Datenkonsistenz oder mit einer der jeweiligen Anwendung entsprechenden Kombination dieser beiden Eigenschaften zur Verfügung zu stellen.

Diese Aufgabe wird gemäß den Merkmalen des Patentanspruchs 1 gelöst.

In dem erfindungsgemäßen Verfahren wird die Verfügbarkeit der Daten durch eine Architekturerweiterung betreffend die Datenhaltung und den Zugriff auf die Daten erreicht. Konsistenz und eine sichere Kommunikation werden durch ein Mittel zur Synchronisation gewährleistet.

Zur besseren Unterscheidung von auf gemeinsame Daten zugreifendem Rechner und zentralem Rechner, ist nachfolgend anstelle des zugreifenden Rechners von mobilem Rechner die Rede. Diese Bezeichnung ist nicht einschränkend zu verstehen, sondern soll statt dessen die Lesbarkeit der folgenden Ausführungen anschaulicher erscheinen lassen. Ferner wird der Begriff zentraler Rechner ersetzt durch den Begriff stationärer Rechner, um ein zum mobilen Rechner passendes begriffliches Pendant zu gewährleisten.

Ein Mobile-Resource-Manager MRM stellt auf dem mobilen Rechner die für die Anwendung sichtbare Schnittstelle zu den Daten dar. Der MRM verfügt über eine lokale replizierte Dateneinheit, die eine Kopie beliebiger Größe der gemeinsamen Daten darstellt. Auf dem mobilen Rechner durchgeführte Änderungen der replizierten Dateneinheit führen zu einer provisorischen Dateneinheit, die eine unbestätigte Kopie der jeweils letzten replizierten Dateneinheit darstellt. Alle lokal durchgeführten Zugriffe auf dem mobilen Rechner ohne Verbindung zu den gemeinsamen Daten auf dem stationären Rechner werden auf dieser provisorischen Dateneinheit ausgeführt. So wird vorteilhaft hohe Verfügbarkeit gewährleistet, da die Anwendung jederzeit auf die lokal vorhandenen Daten, die provisorische Dateneinheit, zugreifen kann.

Der stationäre Rechner SR verfügt über einen Primary-Resource-Manager PRM, der die gemeinsamen Daten enthält. Diese gemeinsamen Daten stellen die validierten Originaldaten dar.

Kommandos, die auf dem mobilen Rechner zu einer Veränderung der provisorischen Dateneinheit führen, werden in einer Protokolldatei abgelegt. Um die provisorische Dateneinheit mit den gemeinsamen Daten auf dem stationären Rechner zu synchronisieren, wird die in der Protokolldatei enthaltene Kommandosequenz zu dem stationären Rechner übertragen. Dies entspricht einer Genehmigungsanfrage an den PRM. Genehmigte Änderungen werden zu dem MRM in einer Genehmigungsantwort zurückgeschickt und gemäß dieser Genehmigungsantwort wird auf dem mobilen Rechner die replizierte Dateneinheit verändert. Hierbei sei bemerkt, daß in der Genehmigungsantwort auch Änderungen, die von anderen mobilen Rechnern stammen, enthalten sein können. Damit wird die auf dem mobilen Rechner enthaltene replizierte Dateneinheit über die gemeinsamen Daten auf dem stationären Rechner mit anderen mobilen Rechnern synchronisiert.

Als Mittel zur Synchronisation wird ein Datensynchronisationssystem DSS verwendet. Diese Komponente ist sowohl auf jedem mobilen Rechner als auch auf dem stationären Rechner vorhanden. Das DSS verwaltet auf dem mobilen Rechner die Sequenzen von Änderungen, die von einer replizierten Dateneinheit zu einer provisorischen Dateneinheit führen. Auf dem stationären Rechner verwaltet das DSS Änderungssequenzen, die zur Aktualisierung der replizierten Dateneinheiten auf den einzelnen mobilen Rechnern notwendig sind. Die richtige Zuweisung von entsprechenden Änderungen an die jeweiligen mobilen Rechner ist Aufgabe des DSS.

Es ist vorteilhaft, wenn das DSS das Blockieren (Locking) einer Dateneinheit ermöglicht, so daß ein bestimmter mobiler Rechner für eine vorgebbare Zeitdauer exklusiven Zugriff auf die gemeinsamen Daten hat. Darüber hinaus kann es vorteilhaft sein, wenn der MRM, sobald die Konfliktrate bei der Übertragung eine bestimmte vorgebbare Schwelle überschreitet, den stationären Rechner blockiert, um Daten nur im exklusiven Zugriff auf die gemeinsamen Daten zu ändern, und somit Konflikte, d.h. Zugriffe von anderen mobilen Rechnern, zu vermeiden (pessimistisches Verfahren).

Ist die Wahrscheinlichkeit für das Auftreten eines Konflikts als gering eingeschätzt, so können Dateneinheiten ohne Blockierung des stationären Rechners geändert werden. Dies reduziert den Kommunikationsaufwand, der zur Konsistenzerhaltung nötig ist (optimistisches Verfahren).

Eine weitere vorteilhafte Verwendung des erfindungsgemäßen Verfahrens besteht in der Definition von Transaktionen zur Gewährleistung hoher Anforderungen an die Konsistenz der Daten. Für eine Transaktion ist kennzeichnend, daß sie entweder ganz oder gar nicht ausgeführt wird. Eine Transaktion besteht weiterhin aus mehreren Kommandos, die auch auf verschiedene Datensätze zugreifen können. Kann eine Transaktion aus unterschiedlichen Gründen, wie z.B. einer Unterbrechung der physikalischen Verbindung zum stationären Rechner, nicht ausgeführt werden, so ist es wichtig, die Transaktion vollständig rückgängig machen zu können. Hierzu müssen geeignete Protokollmechanismen implementiert sein. Dabei ist sowohl auf dem mobilen Rechner, als auch auf dem stationären Rechner zu gewährleisten, daß die Transaktion rückgängig gemacht werden kann.

Weiterhin ist es vorteilhaft, wenn alternativ zu einer Kommandosequenz auch die entsprechende Dateneinheit übertragen werden kann. Dies bietet sich v.a. bei vielen Operationen auf kleinen Dateneinheiten an.

Weiterbildungen des erfindungsgemäßen Verfahrens ergeben sich aus den abhängigen Ansprüchen.

Die Erfindung wird anhand eines Ausführungsbeispiels, das in den Figuren dargestellt ist, weiter erläutert.

Es zeigen

Fig.3    ein Prinzipschaubild, das die Interaktion zwischen replizierten und provisorischen Dateneinheiten auf mobilen Rechnern mit den gemeinsamen Daten auf dem stationären Rechner veranschaulicht,

Fig.4    ein Blockdiagramm, das die funktionalen Einheiten des erfindungsgemäßen Verfahrens darstellt,

Fig.5    ein Diagramm, das den Ablauf des erfindungsgemäßen Verfahrens unter geringen Anforderungen an die Synchronisation der Dateneinheiten darstellt,

Fig.6    ein Diagramm, das das Blockieren zur exklusiven Benutzung der gemeinsamen Daten von einem mobilen Rechner aus darstellt und

Fig.7    ein Diagramm, das darstellt, wie eine beispielhafte Transaktion zwischen mobilem Rechner und stationärem Rechner abläuft.

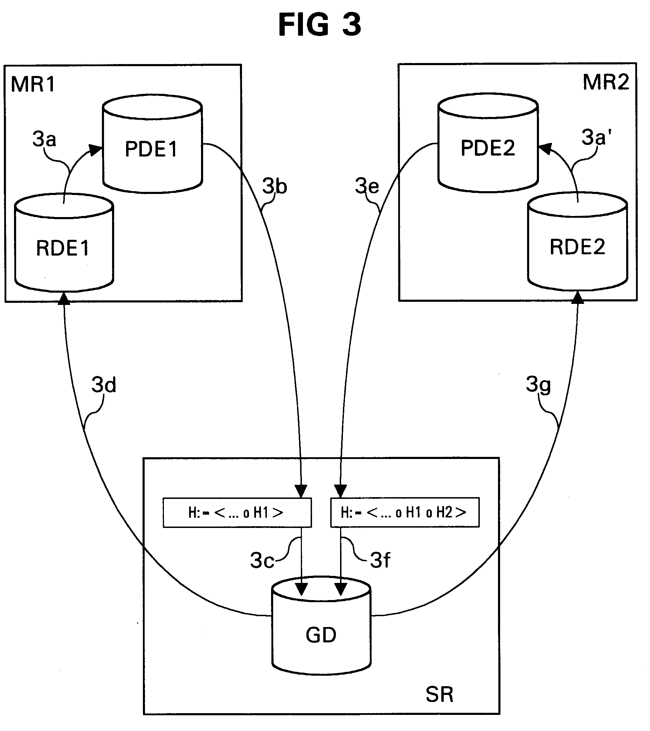

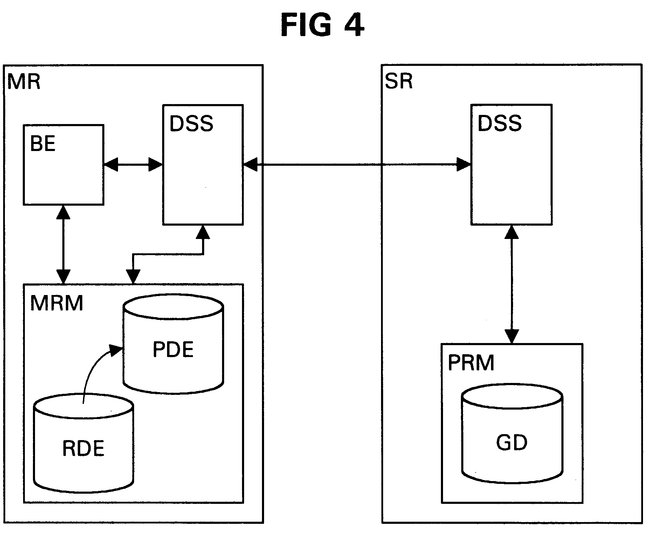

In Fig.3 ist dargestellt, wie zwei mobile Rechner MR1 und MR2 mit einem stationären Rechner SR kommunizieren. Dabei enthalten die mobilen Rechner MR1 und MR2 je eine replizierte Dateneinheit RDE1 und RDE2 und je eine provisorische Dateneinheit PDE1 und PDE2. Auf dem stationären Rechner SR sind die gemeinsamen Daten GD vorhanden. Mittel zum Zugriff auf die Daten oder zur Synchronisation der Daten werden in Fig.4 näher betrachtet.

In einem ersten Schritt 3a wird auf der replizierten Dateneinheit RDE1 des mobilen Rechners MR1 eine erste Operation H1 ausgeführt. Dies führt zur provisorischen Dateneinheit PDE1 auf dem mobilen Rechner MR1. Im nächsten Schritt 3b soll die provisorische Dateneinheit PDE1 des mobilen Rechners MR1 mit den gemeinsamen Daten GD auf dem stationären Rechner SR synchronisiert werden. Dazu wird die erste Operation H1 an den stationären Rechner SR übertragen. Auf dem stationären Rechner SR wird eine Verknüpfung der Daten mit der ersten Operation H1 durchgeführt. In einem Schritt 3c wird die erste Operation auf den gemeinsamen Daten ausgeführt gemäß folgender Verknüpfungsregel:

$$H := <... o \ H1> \qquad (1),$$

wobei

o    einen allgemeinen Verknüpfungsoperator bezeichnet, der anzeigt, daß die erste Operation H1 in die Liste der Gesamtverknüpfungen H aufgenommen wird.

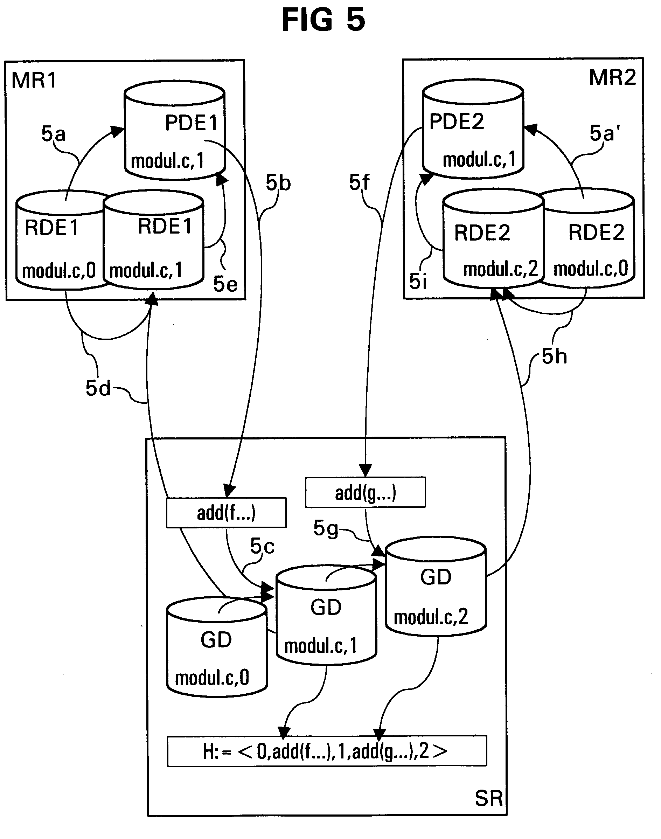

Anschaulich dargestellt, kann man sich die Gesamtverknüpfung H auch vorstellen als eine Archivierungsliste aller auf den gemeinsamen Daten durchgeführten Operation. Darauf wird in Fig.5 noch näher eingegangen.

Diese Anpassung der gemeinsamen Daten GD entspricht einem differentiellen Update durch die erste Operation H1. Es wird nicht die gesamte Dateneinheit vom mobilen Rechner MR1 zum stationären Rechner SR übertragen, sondern statt dessen eine Protokolldatei mit den Kommandos, die auf der zuletzt validierten replizierten Dateneinheit RDE1 ausgeführt wurden. Hierbei sei angemerkt, daß beispielhaft von der ersten Operation ausgegangen worden ist und diese auch eine Sequenz aus Operationen (Kommandosequenz) enthalten kann, die für das differentielle Update der gemeinsamen Daten GD herangezogen wird.

Im Schritt 3d wird an den mobilen Rechner MR1 eine Bestätigung der Synchronisation geschickt. Dadurch findet ein Update der replizierten Dateneinheit RDE1 statt, indem die in der Bestätigung vom stationären Rechner SR geschickte Protokolldatei in die replizierte Dateneinheit RDE1 eingearbeitet wird und somit die replizierte Dateneinheit RDE1 einen validierten Zustand erhält, der Teil der gemeinsamen Daten, der auf dem mobilen Rechner MR1 repliziert zur Verfügung steht, ist wieder identisch mit den diesem Teil entsprechenden gemeinsamen Daten GD.

Da es kennzeichnend für mobile Rechner MR1 und MR2 sein kann, ohne permanente Verbindung zum stationären Rechner SR Daten einer lokalen Datenbank zu modifizieren, ist im Beispiel, das in Fig.3 gezeigt wird, nicht automatisch sichergestellt, daß nach einer Veränderung der gemeinsamen Daten GD durch den mobilen Rechner MR1 eine Synchronisation der Daten auf dem anderen mobilen Rechner MR2 sichergestellt ist, da der mobile Rechner MR2 vorübergehend unerreichbar sein könnte. Weiterhin werde davon ausgegangen, daß eine Verbindung stets von einem mobilen Rechner MR1 und/oder MR2 initiiert wird.

Im vorliegenden Beispiel werde angenommen, die replizierten Dateneinheiten RDE1 und RDE2 seien nicht disjunkt. Also ist die oben beschriebene Veränderung der gemeinsamen Daten GD auch für die auf dem mobilen Rechner MR2 replizierte Dateneinheit RDE2 von Bedeutung, da diese durch die Veränderung von Seiten des mobilen Rechners MR1 nicht mehr validiert sind. Eine Synchronisation beseitigt diesen Mangel, wobei gemäß der normalen Arbeitsweise mobiler Rechner in Systemen ohne permanente Verbindung zum stationären Rechner die Synchronisation vom mobilen Rechner, in diesem Fall MR2, initiiert wird.

Im anderen Fall der disjunkten, also unabhängigen, Teildaten auf den mobilen Rechnern MR1 und MR2, kann es nicht zu Konflikten kommen gemäß des in Fig.3 dargestellten Beispiels, da der replizierte Teil der gemeinsamen Daten auf dem jeweiligen mobilen Rechner von dem jeweiligen anderen Teil der replizierten Daten unabhängig ist.

Hat der mobile Rechner MR2 keine Veränderungen an der replizierten Dateneinheit RDE2 vorgenommen, so wird die replizierte Dateneinheit RDE2 synchronisiert, indem vom stationären Rechner SR die Protokolldatei H1 übertragen wird. In diesem Fall kommt es nicht zu Konflikten, da gemäß Annahme keine Veränderungen auf dem mobilen Rechner MR2 an der replizierten Dateneinheit RDE2 vorgenommen wurde.

Im anderen Fall hat auch der mobile Rechner MR2 Änderungen an der replizierten Dateneinheit RDE2 durchgeführt, angedeutet in Fig.3 durch eine zweite Operation H2 (können auch mehrere Operationen zusammengefaßt in einer Protokolldatei sein) im Schritt 3a'. Die Veränderung wird auf dem mobilen Rechner MR2 in der provisorischen Dateneinheit PDE2 zwischengespeichert, die in einem Schritt 3e synchronisiert werden soll. In dem gezeigten Beispiel wird davon ausgegangen, daß der mobile Rechner MR1 zuvor Veränderungen an der Dateneinheit vorgenommen hat (siehe erste Operation H1) und somit der mobile Rechner MR2 die zweite Operation H2 auf einer nicht validierten Version der replizierten Dateneinheit RDE2 ausgeführt hat. Es kann also zu einem Konflikt kommen, wenn die beiden Operationen H1 und H2 auf denselben Datensatz zugreifen.

Mit Konflikt wird allgemein eine mögliche Inkonsistenz eines oder mehrerer Datensätze bezeichnet. Zu Inkonsistenzen kommt es, wenn verschiedene mobile Rechner den gleichen Datensatz in unterschiedlicher Weise ändern.

Betrachtet man den Fall genauer, wenn der mobile Rechner MR2 Datensätze synchronisieren will, die gerade zuvor von dem mobilen Rechner MR1 verändert wurden, so besteht die Möglichkeit, daß die in Fig.3 (Schritt 3e) zur Synchronisierung der provisorischen Dateneinheit PDE2 übermittelten Kommandos, hier beispielhaft die zweite Operation H2, nicht in die gemeinsamen Daten GD integriert werden können. Bei einer Integration könnte man einen inkonsistenten Zustand der gemeinsamen Daten GD erreichen, da auf dem mobilen Rechner MR1 angenommen wird, die dort replizierte Dateneinheit RDE1 sei validiert und konsistent zu den gemeinsamen Daten GD. Somit kann die provisorische Dateneinheit PDE2 auf dem mobilen Rechner MR2 einen nicht bestätigbaren Zustand erreichen. Um diesen Konflikt zu lösen, werden so viele Kommandos wie möglich (wenn die zweite Operation H2 aus eine Sequenz von Operationen besteht) in die gemeinsamen Daten GD auf dem stationären Rechner SR eingearbeitet.

Hierbei sie bemerkt, daß die Protokolldatei für die Änderungen auf dem ersten mobilen Rechner und die Protokolldatei für die Änderungen auf dem zweiten mobilen Rechner auch wenn sie nicht disjunkt sind, nicht unbedingt Konflikte bewirken müssen. Wenn die Protokolldatei H2 die gemeinsamen Daten GD in einen nicht inkonsistenten Zustand überführt, so können die Kommandos der Protokolldatei H2 validiert, d.h. auf den gemeinsamen Daten GD durchgeführt werden.

Die Kommandos, die tatsächlich zu Konflikten auf den gemeinsamen Daten GD führen, müssen getrennt von den gemeinsamen Daten GD gespeichert werden. Somit wird sichergestellt, daß die Änderungen, die auf dem mobilen Rechner MR2 vorgenommen wurden, nicht verloren sind. Nach Bedarf kann man ebenso diese Änderungen validieren. Letztendlich kann eine Entscheidung, welche Änderung in die gemeinsamen Daten einfließt automatisch durch Funktionen, die beispielsweise besondere Strategien, z.B. die neueste Veränderung eines Datensatzes ist die gültige, verfolgen, oder manuell getroffen werden. Ein weiteres Beispiel, das sich mit der Auflösung von Konflikten befaßt, wird in Fig.5 beschrieben.

Der Vollständigkeit halber sei noch erwähnt, daß, auch wenn die auf den mobilen Rechnern MR1 und MR2 replizierten Dateneinheiten nicht disjunkt sind, es trotzdem möglich ist, daß zuerst die erste Operation H1 (wie oben beschrieben) ausgeführt werden wird und danach die zweite Operation, initiiert vom mobilen Rechner MR2, ausgeführt werden kann, da die Operationen H1 und H2 keine Konflikt bewirken. Die Veränderung der gemeinsamen Daten erfolgt in Schritt 3f und die Gesamtverknüpfung H besteht aus der ersten Operation H1 und der zweiten Operation H2:

$$H := <... o H1 o H2> \qquad (2)$$

Im Schritt 3g wird ein Update der replizierten Dateneinheit RDE2 durchgeführt unter Berücksichtigung der Veränderung sowohl durch die erste Operation H1 als auch durch die zweite Operation H2. Dabei ist besonders zu vermerken, daß jetzt die durch die erste Operation H1 auf dem mobilen Rechner MR1 durchgeführte Veränderung in den validierten Zustand der replizierten Dateneinheit RDE2 auf dem mobilen Rechner MR2 einfließt.

Fig.4 zeigt ein Blockdiagramm, das Komponenten enthält, mit deren Hilfe das erfindungsgemäße Verfahren durchgeführt wird. In Fig.4 sind ein mobiler Rechner MR und ein stationärer Rechner SR dargestellt. Ein Mobile-Resource-Manager MRM stellt auf dem mobilen Rechner MR die Schnittstelle zu den Daten dar. Weiterhin gewährleistet der MRM die Konsistenz der Daten, die in einzelnen Objekten abgelegt sind (Datenobjekte, Datensätze). Die Datenobjekte werden gespeichert als replizierte Dateneinheit und als provisorische Dateneinheit, die entsteht durch Anwendung von Operationen auf der replizierten Dateneinheit. Im einzelnen verfügt der MRM über folgende Schnittstellen: Zum einen stellt er dem Benutzer BE eine Anwendungsschnittstelle zu den Datenobjekten bereit, die entsprechend dem jeweiligen Anwendungsgebiet vorgebbar ausgestaltet sein kann. Zum anderen besitzt der MRM eine Schnittstelle zum Datensynchronisationssystem DSS, anhand derer die Datenobjekte synchronisiert werden.

Das Datensynchronisationssystem DSS ist sowohl auf dem mobilen Rechner MR als auch auf dem stationären Rechner SR vorhanden und verbindet mobilen Rechner MR mit stationärem Rechner SR. Weiterhin arbeitet das DSS vollständig asynchron und kapselt die Kommunikationsbeziehung zwischen den beiden Resource-Managern MRM und PRM, d.h. sowohl MRM und PRM kommunizieren miteinander, ohne von der Ausführungsform der Verbindung zwischen mobilem Rechner MR und stationären Rechner SR Kenntnis zu haben. Im DSS ist die Protokolldatei implementiert, die die einzelnen Kommandos, die auf dem jeweiligen mobilen Rechner MR ausgeführt wurden und die Datenobjekte der replizierten Dateneinheit RDE in die provisorische Dateneinheit PDE überführt haben, enthält.

Der Primary-Resource-Manager PRM ist eine Komponente auf dem stationären Rechner SR, die gewährleistet, daß die gemeinsamen Daten GD stets die aktuellste validierte Version von Daten enthalten.

In Fig.5 wird die Arbeitsweise des erfindungsgemäßen Verfahrens unter der Prämisse selten anfallender Synchronisationen dargestellt (Low-Synchronisation-Mode = Betriebsmodus mit selten anfallenden Synchronisationsanforderungen). In diesem Fall wird der durch Synchronisationen zusätzliche Aufwand (Overhead) an Kommunikation zwischen dem mobilen Rechner und dem stationären Rechner so klein wie möglich gehalten. Die Applikation auf dem mobilen Rechner führt Operationen auf der provisorischen Dateneinheit PDE aus. Diese Operationen werden vom MRM in einer Protokolldatei abgelegt.

Bevor eine Protokolldatei vom mobilen Rechner MR1 zum stationären Rechner SR übertragen wird, ist es vorteilhaft, diese zu filtern. Dabei werden alle Kommandos aus der Protokolldatei entfernt, die für den Sychronisationsprozeß unerheblich sind. Solche Operationen sind:

1. Phantomoperationen, die auf Datenobjekten ausgeführt werden, die gar nicht existieren oder nicht mehr existieren, da sie gelöscht wurden,
2. nur-Lese-Operationen, die keinerlei Änderung an der replizierten Dateneinheit vorgenommen haben,
3. kompensierende Operationen, also Operationen, die sich gegenseitig aufheben wie z.B. das Kreieren und anschließende Entfernen eines Datenobjekts.

Im Beispiel in Fig.5 wird eine Datei "modul.c" einer Programmierumgebung betrachtet. Es kann sich dabei alternativ um jede Art von verteilten Daten handeln, die auch nicht vollständig auf den jeweiligen mobilen Rechnern repliziert vorhanden sein müssen. Im Beispiel von Fig.5 wird die Notation "modul.c,0" verwendet, die aussagt, daß die Datei (gleichzustellen einem Datenobjekt bzw. einem Datensatz) "modul.c" in der Version 0, also im Beispiel ohne eine Veränderung erfahren zu haben, vorliegt.

Je ein Benutzer an dem mobilen Rechner MR1 und an dem mobilen Rechner MR2 arbeiten an der verteilt angeordneten Datei "modul.c". Auf dem mobilen Rechner MR1 wird im Schritt 5a eine neue Funktion f definiert, also in die Datei "modul.c" eingefügt. Dadurch entsteht, wie oben ausführlich beschrieben, eine provisorische Dateneinheit PDE1, die sich von der replizierten Dateneinheit RDE1 inhaltlich dahingehend unterscheidet, daß sie zusätzlich einen Datensatz, i.e. die Funktion f enthält. Diese provisorische Dateneinheit PDE1 ist unbestätigt im Hinblick auf die validierten gemeinsamen Daten GD. Im Schritt 5b wird die Synchronisation der provisorischen Dateneinheit PDE1 vom mobilen Rechner MR1 initiiert.

Eine Protokolldatei, die auf dem mobilen Rechner MR1 generiert wurde, enthält im Beispiel die Operation (äquivalent zu: Kommando) über das Hinzufügen der Funktion f

$$add(f...) \qquad (3).$$

Diese Notation ist rein symbolisch zu verstehen und dient lediglich der Veranschaulichung der im Beispiel dargestellten Vorgänge.

Im Schritt 5c versucht das Datensynchronisationssystem DSS auf dem stationären Rechner SR die Operation (3) in die gemeinsamen Daten GD zu integrieren. Auf dem stationären Rechner SR wird für jede Modifikation eine Protokolldatei, in Fig.3 dargestellt durch die Liste der Gesamtverknüpfungen H, angelegt. Es entsteht im Schritt 5c bei erfolgreicher Integration der Operation (3) in die gemeinsamen Daten GD eine Veränderung der Version der gemeinsamen Daten, dargestellt durch den Übergang von "modul.c,0" auf "modul.c,1". Damit ist gemeint, daß nicht notwendigerweise beide Dateien tatsächlich existent sein müssen, vielmehr ist nur eine Datei "modul.c" in der jeweils validierten Version vorhanden. Um die Versionsübergänge und die damit verbundenen Operationen (im Beispiel nur eine Operation zur besseren Veranschaulichung, aber ohne einschränkende Wirkung) nachvollziehen zu können, dient die Liste der Gesamtverknüpfungen H, die im dargestellten Beispiel nach Schritt 5c folgenden Inhalt hat:

$$H := <0,add(f...),1> \qquad (4),$$

d.h. aus der Datei "modul.c" mit der Version "0" geht durch Ausführung der Operation (3) eine neue Version "1" hervor (Schritt 5c). Hierbei wurde von einer Integration der Operation (3) ohne Konflikt (Kollision) ausgegangen.

Im Schritt 5d erhält der mobile Rechner MR1 eine Protokolldatei, die auf dem stationären Rechner SR zu einer neuen validierten Version "modul.c,1" der gemeinsamen Daten GD geführt hat, und wendet diese auf der replizierten Dateneinheit RDE1 "modul.c,0" auf dem mobilen Rechner MR1 an, woraus ein Übergang der replizierten Dateneinheit RDE1 von "modul.c,0" nach "modul.c,1" folgt. Da im Beispiel die vom stationären Rechner SR zum mobilen Rechner MR1 im Schritt 5d übertragene Protokolldatei gleich der im Schritt 5b übertragenen Protokolldatei ist, hinzugefügt wurde die Operation (3), kann die provisorische Dateneinheit PDE1 als neue validierte replizierte Dateneinheit RDE1 gesetzt werden (Schritt 5e). Die replizierte Dateneinheit RDE1 ist mit den gemeinsamen Daten GD synchronisiert.

Nun werde angenommen, daß auf dem mobilen Rechner MR2, auf der dort replizierten Dateneinheit RDE2 im Schritt 5a' eine Funktion g zur Datei "modul.c,0" hinzugefügt wird, gemäß

$$add(g...) \qquad (5).$$

Im Schritt 5f wird eine Synchronisation vom mobilen Rechner MR2 initiiert. Gemäß der im Schritt 5f übertragenen Protokolldatei wird im Schritt 5g die auf dem mobilen Rechner MR2 hinzugefügte Funktion g, die im Beispiel unterschiedlich zu der zuvor auf dem mobilen Rechner MR1 hinzugefügten Funktion f ist, erfolgreich integriert. Wie bei der Integration im Schritt 5c wird auch hier eine neue Version der gemeinsamen Daten "modul.c,2" gebildet, und die Modifikation in der Liste der Gesamtverknüpfungen H abgespeichert, die folgendes Aussehen nach Durchführung des Schrittes 5g besitzt:

$$H := <0,add(f...),1,add(g...),2> \qquad (6).$$

Es ist somit ausgehend von der Version "1" eine neue Version "2", also die Datei "modul.c,2", entstanden durch die Operation (5) ausgeführt auf den gemeinsamen Daten unter der Annahme, daß es zu keiner Kollision kommt.

Die Bestätigung über das erfolgreiche Hinzufügen der Funktion g ergeht an den mobilen Rechner MR2 zusammen mit der Information über die Veränderungen an den gemeinsamen Daten GD seit der letzten Aktualisierung der replizierten Dateneinheit RDE2 auf dem mobilen Rechner MR2 (Schritt 5h). Die vom stationären Rechner SR an den mobilen Rechner MR2 übertragene Protokolldatei im Schritt 5h und die vom mobilen Rechner MR2 an den stationären Rechner SR im Schritt 5f übertragene Protokolldatei sind (im Gegensatz zu den Ausführungen zu den Schritten 5d und 5e) verschieden.

Im Falle einer erfolgreichen Synchronisation stellt die Protokolldatei im Schritt 5h eine Obermenge der Protokolldatei im Schritt 5f dar. Durch Ausführung der im Schritt 5h übertragenen Protokolldatei auf der replizierten Dateneinheit RDE2 entsteht eine neue Version der replizierten Dateneinheit RDE2, die sowohl die erfolgreich hinzugefügte Funktion g auf dem mobilen Rechner MR2 im Schritt 5a' (Operation (5)), als auch die auf dem mobilen Rechner MR1 im Schritt 5a (Operation (3)) hinzugefügte Funktion f enthält. Die provisorische Dateneinheit PDE2 wird aus Konsistenzgründen entsprechend dem Stand der replizierten Dateneinheit RDE2 aktualisiert.

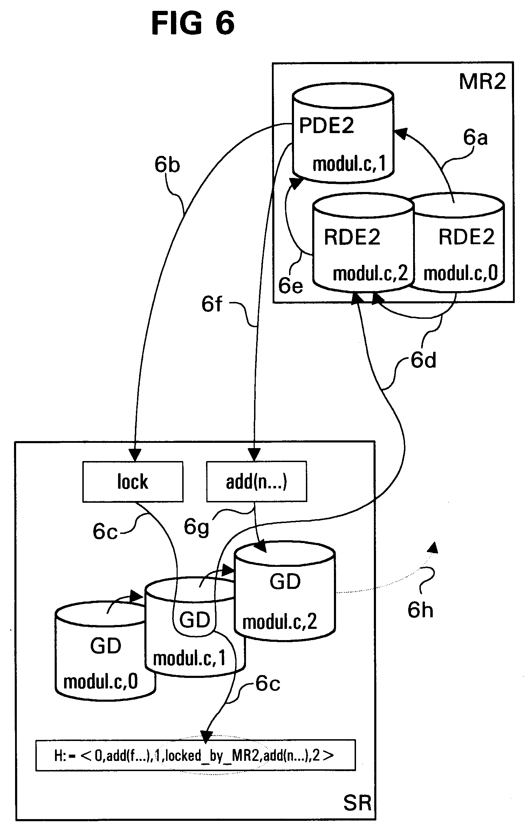

Im beschriebenen Beispiel wurde davon ausgegangen, daß ein mobiler Rechner MR1 eine Funktion f und ein mobiler Rechner MR2 eine Funktion g zu den gemeinsamen Daten hinzufügt. Das Hinzufügen von disjunkten Datenobjekten führt gemäß obiger Beschreibung zu keinem Konflikt. Weiterhin ist es aber möglich, daß auf dem mobilen Rechner MR2 ebenfalls eine Funktion f zu den gemeinsamen Daten hinzufügen wird. Dies führt im Schritt 5g (Integration) zu einer Kollision (Konflikt), da auf ein und denselben Datensatz von zwei mobilen Rechnern MR1 und MR2 zugegriffen wird. Die Protokolldatei, die im Schritt 5h zum mobilen Rechner MR2 als Bestätigung der Veränderungen übertragen wird, enthält dann nur die vom mobilen Rechner MR1 durchgeführten und validierten Änderungen (hier: Operation (3)) an den gemeinsamen Daten GD. Die replizierte Dateneinheit RDE2 auf dem mobilen Rechner MR2 wird die auf dem mobilen Rechner MR2 hinzugefügte Änderung, das Hinzufügen einer gleichnamigen Funktion f, nicht berücksichtigen. Um aber diese auf dem mobilen Rechner MR2 durchgeführte Änderung nicht zu verlieren, wird ein abgeleitetes Datenobjekt auf dem mobilen Rechner MR2 instantiiert. Dieses abgeleitete Datenobjekt enthält die Veränderungen, die von dem mobilen Rechner MR2 vorgeschlagen werden. Somit unterliegt es dem Verantwortungsbereich des Benutzers, was er mit dem abgeleiteten Datenobjekt macht. Falls der Benutzer des mobilen Rechners MR2 es für inakzeptabel erachtet, daß die Veränderung, die er auf den Datensätzen durchgeführt hat, nicht in die gemeinsamen Daten GD eingeht, so wird in Fig.6 eine verfeinerte Weiterbildung des Verfahrens dargestellt, die sicherstellt, daß jeder Benutzer an jedem mobilen Rechner Änderungen auf den gemeinsamen Daten auch wirklich ausführen kann.

Weiterhin kann ein automatischer Abgleich Berücksichtigung finden derart, daß speziell vorgegebene Prozeduren die beiden Datenobjekte untersuchen und dadurch versucht wird, den Benutzerwünschen im Hinblick auf eine neue validierte Version gemeinsamer Daten, automatisiert nachzukommen. Dabei ist den Prozeduren anwendungsabhängig ein vorgebbares Priorisieren, bei der Erstellung einer neuen konsistenten Version der gemeinsamen Daten, zur Konfliktauflösung einzuprogrammieren.

Wird von einem mobilen Rechner ein Datenobjekt auf dem stationären Rechner blockiert, so ist für eine vorgebbare Zeitdauer sichergestellt, daß dieser mobile Rechner auf dieses blockierte Datenobjekt exklusiv zugreifen kann.

Das erfindungsgemäße Verfahren wird dahingehend weitergebildet, daß eine optimistische oder eine pessimistische Betriebsweise des Verfahrens angewandt wird.

Unter optimistischer Betriebsweise wird verstanden, daß die Zugriffe mehrerer mobiler Rechner auf gemeinsame Daten eine vorgebbare Anzahl Konflikte, die im Sinne der Betriebsweise als akzeptabel gewertet wird, nicht überschreitet. Dahingegen sind bei der pessimistischen Betriebsweise die Anzahl der Konflikte und die daraus folgenden Inkonsistenzen im Sinne der jeweiligen Anwendung nicht akzeptabel. Somit wird bei der pessimistischen Betriebsweise der Zugriff auf die gemeinsamen Daten unter der Bedingung der Blockierung dieser gemeinsamen Daten für andere mobile Rechner durchgeführt. Solch ein exklusiver Zugriff eines mobilen Rechners auf die gemeinsamen Daten stellt sicher, daß die auf den replizierten Daten durchgeführten Änderungen auch auf die gemeinsamen Daten durchgreifen.

Die Veränderung der Betriebsweise (optimistisch oder pessimistisch) kann automatisch erfolgen auf einen vorgebbaren Anreiz hin, der durch folgende Parameter, die dem Datensynchronisationssystem auf dem stationären Rechner zugänglich gemacht werden, festgelegt wird:

1. Ein Parameter whsize, der die Anzahl Operationen angibt, die berücksichtigt werden sollen zur Beurteilung, ob die optimistische oder die pessimistische Betriebsweise die bevorzugte Betriebsweise ist,

2. ein Parameter lth, der eine vorgebbare untere Schranke für die Anzahl der Konflikte innerhalb der letzten whsize Operationen angibt, unter der die optimistische Betriebsweise durchgeführt wird,

3. ein Parameter hth, der eine vorgebbare obere Schranke für die Anzahl der Konflikte innerhalb der letzten whsize Operationen angibt, oberhalb derer die pessimistische Betriebsweise angewandt wird.

Die Festsetzung der oberen Schranke hth und der unteren Schranke lth wird anwendungsabhängig vorgegeben.

Die beiden Parameter lth und hth haben den Sinn, ein hysterisches Wechseln zwischen optimistischer und pessimistischer Betriebsweise zu verhindern.

In Fig.6 wird das Blockieren der gemeinsamen Daten GD, initiiert von einem mobilen Rechner MR, dargestellt. Fig.6 ist dabei im Zusammenhang mit Fig.5 zu sehen. Im Schritt 6a wird eine Funktion n gemäß der Operation

$$add(n...) \qquad (7)$$

eingefügt in die replizierte Dateneinheit RDE2 auf dem mobilen Rechner MR2. Dabei entsteht, wie oben ausführlich beschrieben, die provisorische Dateneinheit PDE2. Die replizierte Dateneinheit RDE2 bleibt unverändert, da in ihr nur von dem stationären Rechner SR bestätigte Operationen ausgeführt werden und somit die Konsistenz der replizierten Dateneinheit RDE2 mit den gemeinsamen Daten GD auf dem stationären Rechner SR gewährleistet wird.

In einem Schritt 6b wird die Synchronisation der Datenobjekte, also sowohl der replizierten Dateneinheit RDE2 als auch der provisorischen Dateneinheit PDE2 eingeleitet, indem in einer Protokolldatei die Operation (7) übertragen wird, zusätzlich mit einer Blockierungs-Anforderung an die gemeinsamen Daten GD auf dem stationären Rechner SR.

Im Schritt 6c wird die Datei "modul.c" für die Verwendung durch den mobilen Rechner MR2 exklusiv reserviert (blockiert). Damit ist die Datei "modul.c" für alle anderen mobilen Rechner außer dem mobilen Rechner MR2 gesperrt

Diese Blockierung führt stets zu einer Aktualisierung sowohl der replizierten Dateneinheit RDE2 (Schritt 6d) als auch der provisorischen Dateneinheit PDE2 (Schritt 6e).

Nach dieser Aktualisierung sieht der Benutzer des mobilen Rechners MR2 die existierende Definition der Funktion f, die zuvor von dem mobilen Rechner MR1 eingefügt wurde (siehe Fig.5). Er sieht also den aktuellen Stand der gemeinsamen Daten GD. Entsprechend kann der Benutzer eine Funktionen mit anderem Namen, hier beispielhaft die Funktion n mittels der Operation (7), hinzufügen (siehe Fig.6, Schritt 6f) oder die bestehende Funktion modifizieren, löschen oder sonst je nach Anwendungsgebiet und Berechtigung Aktionen durchführen. In einem weiteren Schritt 6g wird angedeutet, daß eine Integration der Operation (7) auf die gemeinsamen Daten angewandt wird und die Datei "modul.c,1" in eine neue Version "modul.c,2" überführt wird. Dabei wird die Liste der Gesamtverknüpfungen H, die im Schritt 6c um einen Eintrag erweitert wurde, der zeigt, daß die gemeinsamen Daten GD von dem mobilen Rechner MR2 benutzt werden, derart erweitert, daß gilt:

$$H := <0,add(f...),1,locked\_by\_MR2,add(n...),2> \qquad (8).$$

Es sei an dieser Stelle ausdrücklich darauf hingewiesen, daß die gemeinsamen Daten in diesem Beispiel vollständig repliziert beispielhaft als eine Datei "modul.c" auf den mobilen Rechnern vorhanden ist. Laut dem erfindungsgemäßen Verfahren ist aber auch nur ein Teil der Daten repliziert anwendbar und es können beliebige Datenobjekte (Datensätze) Verwendung finden.

Der Eintrag "add(f...)" in der Liste der Gesamtverknüpfungen H in Formel (8) bezieht sich auf Fig.5 und die dort beschriebene Operation (3). Fig.6 ist als eine um die Eigenschaft des mit der Blockierung verbundenen Mechanismus erweiterte Teildarstellung der Fig.5 anzusehen.

Nach dem Schritt 6g folgen weitere Schritte, die wieder das Update der replizierten Dateneinheit RDE2 und der provisorischen Dateneinheit PDE2 einleiten und durchführen, angedeutet durch einen einleitenden Schritt 6h. Dies geschieht analog zu Fig.5.

Im Beispiel, in dem die Datei "modul.c" Teil einer Programmierumgebung ist, kann im Fall einer objektorientierten Programmiersprache auch eine überladene Definition von der Funktion f (als Methode) hinzugefügt werden, nachdem der Benutzer durch die beim Blockieren implizite Synchronisation von einer gegebenenfalls vorhandenen Funktion f mit anderen Parametern erfahren hat.

Die Erweiterung bei der Blockierung der gemeinsamen Daten GD besteht darin, daß im beschriebenen Fall die vom Benutzer auf dem mobilen Rechner MR2 durchgeführte Operation auf die gemeinsamen Daten GD durchgreift.

Darüber hinaus ist es vorteilhaft, wenn das Blockieren zur exklusiven Benutzung eines einzelnen mobilen Rechners mit einer vorgebbaren Zeitdauer behaftet ist, deren Überschreitung als Folge die Aufhebung der Blockierung hat.

Somit ist sichergestellt, daß ein mobiler Rechner die gemeinsamen Daten nicht länger als eine vorgebbare Zeit blockiert.

Eine Weiterbildung des erfindungsgemäßen Verfahrens besteht darin, Transaktionen zu definieren als eine Sequenz einzelner Operationen, die eine Sonderbehandlung in der Art erfahren, als sie eine unteilbare Einheit bilden. Es ist möglich, daß die einzelnen Operationen innerhalb einer Transaktion verschiedene Datensätze beeinflussen. Eine Prämisse für Transaktionen besteht darin, daß sie den globalen Zustand des Systems verändern, indem alle Operationen der jeweiligen Transaktion ausgeführt werden, oder daß das System in dem Zustand, der vor der Ausführung eines einzelnen Kommandos der Transaktion vorherrschte, fortbesteht, falls die Transaktion nicht zu Ende ausgeführt werden kann. Diese Eigenschaft bedingt einen Mechanismus, der einzelne in der Transaktion enthaltene Operationen rückgängig machen kann. Um diese Rückwärtsschritte zu gewährleisten, werden vom MRM provisorische Dateneinheiten bereitgehalten. Sollte die Transaktion gelingen, so ist damit eine Aktualisierung und Validierung aller provisorischen Dateneinheiten verbunden.

Eine weitere wichtige Eigenschaft besteht darin, daß die Transaktion den Zustand eines Systems von einem konsistenten Zustand in einen anderen konsistenten Zustand überführt. Innerhalb der Transaktion können provisorisch inkonsistente Zustände bestehen, die im Falle eines Fehlschlagens der Transaktion in den letzten konsistenten Zustand vor der Durchführung der Transaktion zurückgeführt werden müssen.

Die in der Transaktion vorgenommenen Modifikationen der Datenobjekte sind solange für den Benutzer unsichtbar, bis die Transaktion erfolgreich abgeschlossen wird. Nach dem erfolgreichen Abschluß der Transaktion bleibt das Resultat persistent erhalten und kann nicht wieder rückgängig gemacht werden.

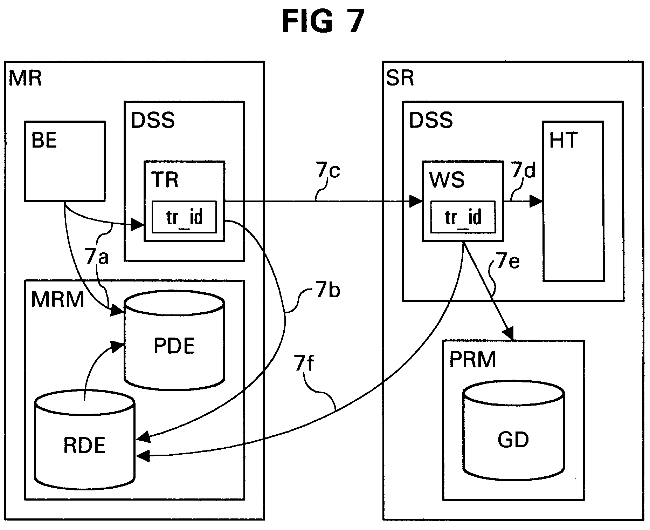

In Fig.7 wird die Ausführung einer Transaktion veranschaulicht. Im folgenden werden die einzelnen Phasen der Transaktion näher erläutert unter der Annahme, daß die Transaktion erfolgreich durchgeführt werden kann.

In Schritt 7a wird die Transaktion beispielhaft vom Benutzer BE eingeleitet. Die einzelnen Operationen (Kommandos) der Transaktion werden durchgeführt auf der provisorischen Dateneinheit PDE des MRM. Falls während der Transaktion ein Fehler auftritt, können alle Schritte der Transaktion rückgängig gemacht werden, indem die provisorische Dateneinheit PDE gleichgesetzt wird mit der replizierten Dateneinheit RDE. Alle Operationen der Transaktion werden in einem Transaktionsdatensatz TR gespeichert. Alle Datenobjekte, die von einer Transaktion betroffen sind, haben nach der Transaktion, sei sie erfolgreich oder nicht, keine unbestätigten Zustände. Im Beispiel, das in Fig.7 angegeben ist, werden je ein Kundenkonto und ein Verkäuferkonto in der provisorischen Dateneinheit angelegt. Ein Transaktionsobjekt repräsentiert das Zusammenspiel von Benutzer und DSS. Die Operationen 'Einzahlen' und 'Auszahlen' bezogen auf die jeweiligen Konten werden im Transaktionsdatensatz TR abgespeichert.

Schritt 7b zeigt eine MRM-Validierungsphase, in der der MRM entscheidet, ob eine Transaktion den Konsistenzanforderungen genügt. Hierbei kann beispielsweise überprüft werden, ob genügend Geld für den Kauf bzw. die Abbuchung vom Käuferkonto zur Verfügung steht. Ist der Bescheid des MRM zur Durchführung der Transaktion positiv, so erfährt die Transaktion eine vorläufige Bestätigung. Dies hat zur Folge, daß sie einen lokalen Ausfall auf dem mobilen Rechner überstehen würde. Im Falle eines Ausfalls wird eine Protokolldatei dahingehend untersucht werden, ob Transaktionen enthalten sind, die eine vorläufige Bestätigung erhalten haben. In diesem Fall wird (mindestens) eine neue provisorische Dateneinheit angelegt, in der auf der replizierten Dateneinheit die protokollierten Kommandos ausgeführt werden. Daraufhin kann wie vor dem Ausfall des mobilen Rechners fortgefahren werden.

Das Datensynchronisationssystem DSS erhält die Aufforderung vom MRM und sendet den Transaktionsdatensatz, der mit einer speziellen Identifikation tr_id versehen ist, zu dem Datensynchronisationssystem DSS auf dem stationären Rechner SR (siehe Schritt 7c).

Die PRM-Validierungsphase im Schritt 7d findet auf dem stationären Rechner SR statt. Vorläufig bestätigte Transaktionen werden in eine Warteschlange WS eingefügt. Somit wird sichergestellt, daß stets eine Transaktion zu einer Zeit ausgeführt wird, und es nicht zu Inkonsistenzen zwischen Transaktionen kommen kann.

Im Schritt 7e wird die PRM-Update-Phase eingeleitet, in der die Transaktion auf die gemeinsamen Daten GD angewandt wird. Sobald alle Operationen der Transaktion mit der Kennung tr_id ausgeführt wurden, wird der Transaktionsdatensatz gelöscht. Das DSS auf dem stationären Rechner SR bestätigt die Ausführung der Transaktion durch das Senden eines Update-Datensatzes.

Im Schritt 7f wird die MRM-Update-Phase durchgeführt, indem das Datensynchronisationssystem DSS auf dem mobilen Rechner MR eine Bestätigung über Erfolg oder Mißerfolg der Transaktion mit der Kennung tr_id bekommt. Wurde die Transaktion erfolgreich durchgeführt, so wird die replizierte Dateneinheit RDE auf den aktuellen Stand gemäß den gemeinsamen Daten GD gebracht (Update). Schlug die Transaktion hingegen fehl, so gehen die durch die Transaktion bewirkten Änderungen in der provisorischen Dateneinheit PDE nicht in die replizierte Dateneinheit RDE ein.

Im Rahmen dieses Dokuments wurden folgende Veröffentlichungen zitiert:

[1] ORACLE: Oracle Mobile Agents. Client/Agent/Server-Computing, München 1996, S.5,6.

[2] ORACLE: Oracle 7 - Symmetrische Replikation. Asynchron Verteilte Technologie, München 1995, S.1-12.

**Patentansprüche**

1.  Verfahren zur Regelung eines Zugriffs von Rechnern auf Daten eines zentralen Rechners,

    a) bei dem auf einem ersten Rechner ein vorgebbarer Teil der Daten des zentralen Rechners in einer ersten Kopie gespeichert wird,

b) bei dem eine eine Änderung bewirkende mindestens eine Operation auf dem ersten Rechner ausgeführt wird, indem die erste Kopie in eine zweite Kopie kopiert wird und die mindestens eine Operation auf der zweiten Kopie ausgeführt wird,

c) bei dem die die Änderung bewirkende mindestens eine Operation in einer ersten Kommandosequenz abgespeichert wird,

d) bei dem auf dem zentralen Rechner die Daten den Daten der zweiten Kopie auf dem ersten Rechner angepaßt werden, indem die erste Kommandosequenz vom ersten Rechner zum zentralen Rechner übertragen wird und die erste Kommandosequenz auf dem zentralen Rechner ausgeführt wird,

e) bei dem die erste Kopie der zweiten Kopie angeglichen wird, indem von dem zentralen Rechner eine zweite Kommandosequenz, die eine Veränderung der Daten auf dem zentralen Rechner, die die erste Kopie betreffen, berücksichtigt, zu dem ersten Rechner übertragen wird und dort auf der ersten Kopie ausgeführt wird,

f) bei dem, wenn ein zweiter Rechner seit dem Anlegen der ersten Kopie auf dem ersten Rechner den für den ersten Rechner bedeutsamen Teil der Daten des zentralen Rechners verändert hat, beim Angleichen der ersten Kopie auf dem ersten Rechner diese von dem zweiten Rechner auf den Daten durchgeführte Veränderung berücksichtigt wird, indem eine dritte Kommandosequenz, die eine von dem zweiten Rechner durchgeführte Änderung darstellt, in Schritt e) in der zweiten Kommandosequenz berücksichtigt wird, sofern der vorgebbare Teil der Daten der ersten Kopie des ersten Rechners betroffen ist.

2. Verfahren nach Anspruch 1,
bei dem eine Transaktion, die aus der ersten Kommandosequenz besteht, entweder ganz oder gar nicht ausgeführt wird, indem gewährleistet wird, daß durch geeignete Protokolliermechanismen bei einer Unterbrechung der Transaktion die Transaktion bis in einen letzten konsistenten Zustand rückgängig gemacht wird.

3. Verfahren nach Anspruch 1,
bei dem durch eine Blockierung die mit der ersten Kopie auf dem ersten Rechner verknüpften Daten auf dem zentralen Rechner zur ausschließlichen Verwendung für den ersten Rechner für eine vorgebbare Zeitdauer reserviert werden.

4. Verfahren nach einem der Ansprüche 1 oder 3,

bei dem anstelle der ersten Kommandosequenz die zweite Kopie des ersten Rechners zu dem zentralen Rechner übertragen wird und/oder anstelle der zweiten Kommandosequenz die erste Kopie des ersten Rechners entsprechende Daten des zentralen Rechners von dem zentralen Rechner zum ersten Rechner übertragen werden.

5. Verfahren nach einem der Ansprüche 1 bis 3,
bei dem in der jeweiligen Kommandosequenz nur Operationen enthalten sind, die zu Änderungen auf den jeweiligen Daten führen, indem Operationen, die sich gegenseitig kompensieren, ganz oder teilweise nicht übertragen werden.

6. Verfahren nach einem der Ansprüche 3 bis 5,
bei dem die Blockierung für auf die Daten des zentralen Rechners zugreifende Rechner ausgelöst wird, sobald eine erste vorgebbare Schwelle, durch die eine nicht mehr vertretbare Anzahl von Konflikten innerhalb einer bestimmten Anzahl von zurückliegenden Zugriffen auf die Daten des zentralen Rechners festgelegt wird, überschritten wird.

7. Verfahren nach Anspruch 6,
bei dem die Blockierung für auf die Daten des zentralen Rechners zugreifende Rechner automatisch aufgehoben wird, sobald eine zweite vorgebbare Schwelle, durch die eine akzeptable Anzahl von Konflikten innerhalb der bestimmten Anzahl von zurückliegenden Zugriffen auf die Daten des zentralen Rechners festgelegt wird, unterschritten wird.

8. Verfahren nach Anspruch 7,
bei dem eine vorgebbare Zeitdauer eine obere Schwelle für die längste Blockierung eines ersten oder zweiten Rechners beim Zugriff auf die Daten des zentralen Rechners festlegt.

# FIG 1

R1

Client CL

WS

R2

Client CL

WS

Msg

WS

Agent AG

GD

ZR

# FIG 2

R1

TD1

DB-IFC

R2

TD2

DB-IFC

DB-IFC

GD

ZR

# FIG 3

MR1

3a

PDE1

RDE1

3b

MR2

PDE2

3a'

RDE2

3e

3d

3g

H: = < ... o H1 >

H: = < ... o H1 o H2 >

3c

3f

GD

SR

# FIG 4

# FIG 5

# FIG 6

MR2

PDE2

modul.c,1

6a

6b

RDE2

modul.c,2

RDE2

modul.c,0

6e

6f

6d

lock

add(n...)

6c

6g

GD

modul.c,2

6h

GD

modul.c,1

GD

modul.c,0

6c

H: = < 0,add(f...),1,locked_by_MR2,add(n...),2 >

SR

# FIG 7